(19) Europäisches Patentamt
European Patent Office
Office européen des brevets

(11) Publication number: **0 393 903 A2**

(12) **EUROPEAN PATENT APPLICATION**

(21) Application number: 90303807.3

(22) Date of filing: 09.04.90

(51) Int. Cl.[5]: C08G 18/76, C08G 18/10, C08G 18/48, C08G 18/78

(30) Priority: 14.04.89 GB 8908495

(43) Date of publication of application: 24.10.90 Bulletin 90/43

(84) Designated Contracting States: AT BE CH DE DK ES FR GB GR IT LI LU NL SE

(71) Applicant: IMPERIAL CHEMICAL INDUSTRIES PLC
Imperial Chemical House, Millbank
London SW1P 3JF(GB)

(72) Inventor: Verhelst, Gabriel
Mechelsesteenweg 667
B-3020 Herent(BE)
Inventor: Pham, Tu
Clos de la Charmille 2
B-5980 Grez-Doiceau(BE)
Inventor: Muller, Louis
Potbeekstraat 4
B-3052 Ottenburg(BE)
Inventor: De Witte, Mireille
H. Persoonsstraat 76
B-9291 Gent(BE)
Inventor: Gillis, Herbert Russell
Unit 4, 8230 Crestview Drive
Sterling Heights, Michigan 48077(US)

(74) Representative: Leherte, Georges Maurice Lucien Marie et al
Imperial Chemical Industries PLC Legal Department: Patents P.O. Box 6 Bessemer Road
Welwyn Garden City Herts. AL7 1HD(GB)

# (54) Polyisocyanate compositions and their use in the manufacture of polymeric foams.

(57) The invention relates to polyisocyanate compositions comprising compounds of the general formula

$T_m(R)_n$

wherein T represents a chain of more than 70 atoms, m represents an integer of at least 1, R represents an isocyanate group containing residue and n is an integer of at least 2, at least one of the residues represented by R containing at least two isocyanate groups separated one from another by a chain of from 5 to 30 atoms and the sum of the residues represented by R constituting less than 50 % of the total molecule on a weight basis.

The invention also relates to a method for the preparation of flexible polymeric foams using such polyisocyanate compositions.

EP 0 393 903 A2

This invention relates to polyisocyanate compositions and to their use in the manufacture of polymeric foams.

The manufacture of useful polymeric materials by reacting organic polyisocyanates with compounds containing a plurality of isocyanate-reactive groups is well established. Thus, polyurethane materials, which may be flexible or rigid, foamed or unfoamed, are produced on a large scale by reacting polyisocyanates with low and/or high molecular weight polyhydroxy compounds. Similarly, polyurea products are obtained by reacting polyisocyanates with polyamines.

The organic polyisocyanates used in these reactions include simple aliphatic and aromatic diisocyanates but also more complex derivatives thereof containing urethane, urea, allophanate, biuret, carbodiimide, uretonimine or isocyanurate residues. In some cases, these modified polyisocyanates are used in order to provide a liquid form of a normally solid isocyanate compound, for example the so-called MDI variants. In other cases, they are used to provide other desired technical effects.

The production of foamed materials based on polyurethane and other polymer systems derived from organic polyisocyanates is well established. Depending upon the formulations used in their manufacture, the products can vary in texture from the soft flexible foams used as cushioning materials to the rigid foams used as insulating or structural materials. Similarly, depending upon the amount of blowing agent used, products having densities varying between about 10 and about 1100 kg/m$^3$ can be made.

Flexible polyurethane foams have been manufactured for more than thirty years from organic polyisocyanates and polymeric polyols. Water, which reacts with isocyanates to form carbon dioxide (and urea linkages), has been employed as the principal blowing agent. The polyisocyanate most commonly used in the production of flexible foam has been tolylene diisocyanate (TDI) but recent years have seen an increasing use of diphenylmethane diisocyanates (MDI). The polyols originally used in flexible foam production were slightly branched polyesters such as poly(diethylene adipates) but most flexible foam production is now based upon polyether polyols, especially triols, having hydroxyl equivalent weights of from about 750 to about 5000.

Whilst the lower volatility of MDI relative to TDI is an advantage from the industrial hygiene point of view, a limitation of MDI based flexible foam systems has been the difficulty experienced in producing low density foams (below 30 kg/m$^3$) without using auxiliary blowing agents, especially chlorofluorocarbons such as trichlorofluoromethane. This problem is aggravated by the use of the prepolymer process since this brings about a dilution of the isocyanate content of the MDI. In view of international agreement that the use of chlorofluorocarbons should be reduced, it is clearly undesirable that flexible foam formulations should contain significant amounts of such blowing agents.

The isocyanate index (ratio of isocyanate groups to isocyanate-reactive groups expressed as a percentage) in TDI based flexible foam formulations is usually between 80 and 110, typically 103-108 but, recently, halocarbon-free MDI based one-shot formulations have been proposed having much lower indices, for example below 60. Whilst these formulations allow low density foams to be made despite the absence of halocarbon blowing agent, some of the physical properties of the foams, for example tear strength, do not reach the levels achieved by TDI in the one-shot process.

It has now been found that useful polyisocyanate compositions may be obtained by reacting an excess of organic polyisocyanate having an average functionality greater than 2 as hereinafter defined with certain polyols.

Accordingly, the invention provides a new polyisocyanate composition having an NCO content of from 5 to 30 % by weight obtained by reacting a polyol having an average nominal hydroxyl functionality of from 2 to 3 and an average hydroxyl equivalent weight of from about 750 to about with a stoichiometric excess of an organic polyisocyanate comprising more. than 65 % by weight of polyisocyanate having an isocyanate functionality of 3 or more.

It has also been found that flexible foams having low density, high resilience and high tear strength can be prepared from the new polyisocyanate compositions according to the invention and, more generally from polyisocyanate components comprising certain specific MDI derivatives, using water as substantially the sole blowing agent under the conditions hereinafter described.

Accordingly, the present invention provides a method for the preparation of a flexible polymeric foam which comprises reacting a polyisocyanate component with an isocyanate-reactive component comprising water, the polyisocyanate component comprising diphenylmethane diisocyanate derivatives having the general formula :

$T_m(R)_n$ (1)

wherein T represents a chain of more than 70 atoms, m represents an integer of at least 1, R represents an isocyanate group containing residue and n is an integer of at least 2, at least one of the residues represented by R containing at least two isocyanate groups separated one from another by a chain of from

5 to 30 atoms and the sum of the residues represented by R constituting less than 50 % of the total molecule on a weight basis.

The term "nominal hydroxyl functionality" used in relation to the polyol employed in the preparation of the new polyisocyanate compositions of the invention refers to the hydroxyl functionality that a polyol would be expected to have having regard to its monomeric components. For example, a polyether polyol prepared by the addition of propylene oxide to a glycol will have a nominal hydroxyl functionality of 2 although, in fact, its average functionality may be somewhat less than 2. Thus, for a polyether polyol, the average nominal hydroxyl functionality is the average functionality (number of active hydrogen atoms) of the initiator or initiators used in its preparation.

The "reacted residues" referred to above in connection with formula 1 are best described with reference to prepolymers obtained by reacting an isocyanate-reactive compound with a stoichiometric excess of MDI. Such a prepolymer will contain free MDI, residues of reacted MDI and residues of the reacted isocyanate-reactive compound.

References herein to the number of atoms present in a chain indicate the number of atoms present in the backbone of a chain but not hydrogen atoms or other substituents attached to backbone atoms. Thus, in a poly(propylene oxide) chain, the carbon and oxygen atoms constituting the backbone of the chain are counted but not the attached hydrogen atoms or the atoms present in the methyl substituents.

As examples of the types of chain represented by T in the polyisocyanate derivatives of Formula 1, there may be mentioned polyesters, polyesteramides, polycarbonates, polythioethers, polyacetals, polyolefins, polysiloxanes and, especially, polyethers.

Preferred average equivalent weights for the polyols used for preparing the new polyisocyanate compositions according to the invention, lie in the range from 750 to 4000, for example from 1000 to 3000. Mixtures of two or more polyols varying in functionality, equivalent weight and/or polymer backbone may be used provided such mixtures conform to the average functionality and average equivalent weight criteria specified herein.

Suitable polyols and methods for their preparation have been fully described in the prior art and, as examples of such polyols, there may be mentioned polyesters, polyesteramides, polythioethers, polycarbonates, polyacetals, polyolefins, polysiloxanes and, especially, polyethers.

Polyether polyols which may be used include products obtained by the polymerisation of a cyclic oxide, for example ethylene oxide, propylene oxide, butylene oxide or tetrahydrofuran in the presence, where necessary, of polyfunctional initiators. Suitable initiator compounds contain a plurality of active hydrogen atoms and include water and polyols, for example ethylene glycol, propylene glycol, diethylene glycol, cyclohexane dimethanol, resorcinol, bisphenol A, glycerol, trimethylolpropane or 1,2,6-hexanetriol Mixtures of initiators and/or cyclic oxides may be used.

Especially useful polyether polyols include polyoxypropylene diols and triols and poly(oxyethylene-oxypropylene) diols and triols obtained by the simultaneous or sequential addition of ethylene and propylene oxides to di- or trifunctional initiators as fully described in the prior art. Random copolymers having oxyethylene contents of 10-80 %, block copolymers having oxyethylene contents of up to 25 % and random/block copolymers having oxyethylene contents of up to 50 %, based on the total weight of oxyalkylene units may be mentioned. Mixtures of the said diols and triols can be particularly useful. Other particularly useful polyether polyols include polytetramethylene glycols obtained by the polymerisation of tetrahydrofuran.

Polyester polyols which may be used include hydroxyl-terminated reaction products of polyhydric alcohols such as ethylene glycol, propylene glycol, diethylene glycol, 1,4-butanediol, neopentyl glycol, 1,6-hexanediol, cyclohexane dimethanol, bis(hydroxyethyl) terephthalate, glycerol, trimethylolpropane or polyether polyols or mixtures of such polyhydric alcohols, and polycarboxylic acids, especially dicarboxylic acids or their ester-forming derivatives, for example succinic, glutaric and adipic acids or their dimethyl esters, sebacic acid, phthalic anhydride, tetrachlorophthalic anhydride or dimethyl terephthalate or mixtures thereof. Polyesteramides may be obtained by the inclusion of aminoalcohols such as ethanolamine in polyesterification mixtures. Polyesters obtained by the polymerisation of lactones, for example caprolactone, in conjunction with a polyol, or of hydroxy carboxylic acids such as hydroxy caproic acid, may also be used.

Polythioether polyols which may be used include products obtained by condensing thiodiglycol either alone or with other glycols, alkylene oxides, dicarboxylic acids, formaldehyde, amino-alcohols or aminocarboxylic acids.

Polycarbonate polyols which may be used include products obtained by reacting diols such as 1,3-propanediol, 1,4-butanediol, 1,6-hexanediol, diethylene glycol or tetraethylene glycol with diaryl carbonates, for example diphenyl carbonate, or with phosgene.

Polyacetal polyols which may be used include those prepared by reacting glycols such as diethylene glycol, triethylene glycol or hexanediol with formaldehyde. Suitable polyacetals may also be prepared by polymerising cyclic acetals.

Suitable polyolefin polyols include hydroxy-terminated butadiene homo- and copolymers and suitable polysiloxane polyols include polydimethylsiloxane diols and triols.

Other polyols which may be used comprise dispersions or solutions of addition or condensation polymers in polyols of the types described above. Such modified polyols have been fully described in the prior art and include products obtained by the in situ polymerisation of one or more vinyl monomers, for example styrene and acrylonitrile, in polymeric polyols, for example polyether polyols, or by the in situ reaction between a polyisocyanate and an amino- or hydroxy-functional compound, such as triethanolamine, in a polymeric polyol.

Organic polyisocyanates which may be used in preparing the new polyisocyanate compositions of the invention include organic triisocyanates, tetraisocyanates and polyisocyanates of higher functionality and mixtures thereof with diisocyanates provided such mixtures contain more than 65 % by weight of polyisocyanate having an isocyanate functionality of 3 or more.

Triisocyanates and higher functionality polyisocyanates which may be used have been fully described in the prior art and include 2,4,6-triisocyanatetoluene, 2,4,4′-triisocyanatediphenyl either as well as products obtained by the modification of diisocyanates, for example diphenylmethane or toluene diisocyanates, so as to increase the overall isocyanate functionality. Such products include diisocyanates modified in known manner by the introduction of urethane, allophanate, urea, biuret, carbodiimide, uretonimine or isocyanurate residues so as to contain more than 65 % by weight of polyisocyanate having an isocyanate functionality of 3 or more.

Particularly suitable polyisocyanates for use in preparing the polyisocyanate compositions of the invention include polymethylene polyphenylene polyisocyanates having an isocyanate functionality of 3 or more and mixtures thereof with diisocyanates, especially diphenylmethane diisocyanates, provided such mixtures contain more than 65 % by weight of polyisocyanate of functionality 3 or more.

Especially useful polymethylene polyphenylene polyisocyanate compositions which may be used contain :

0 - 20 % of diphenylmethane diisocyanates,

40 - 80 % of dimethylene triphenylene triisocyanates,

5 - 25 % of polymethylene polyphenylene tetra- and pentaisocyanates, and

0 - 20 % of higher polymethylene polyphenylene polyisocyanates

on a weight basis. The diisocyanate content of such compositions is preferably less than 15 % by weight and the content of polyisocyanates having isocyanate functionalities of 6 or more is preferably less than 10 % by weight. Such compositions and methods for their preparation have been described in the prior art, for example in DE-OS 3245678 and EP-A-133538.

The polyisocyanates described above may also be used in such a form that they contain polymeric fillers, for example dispersed polyurea particles.

In preparing the polyisocyanate compositions of the invention, the organic polyisocyanate and polyol may be reacted together at ambient or elevated temperatures, for example 50 to 110 °C, under substantially anhydrous conditions and optionally in the presence of catalysts until reaction between the isocyanate and hydroxyl groups is substantially complete. The initial NCO/OH ratio is selected in known manner to provide an isocyanate composition having the desired final NCO content.

It might be of particular interest to dilute the compositions of the invention with diisocyanates.

The polyisocyanate derivatives of Formula 1 preferably have molecular weights greater than 1800 with each T being a chain of more than 70, preferably more than 100, atoms in length. Especially preferred polyisocyanates have molecular weights in the range 3,000 to 10,000. It is also preferred that the ratio of the molecular weight of the polyisocyanate of Formula 1 to the number of isocyanate group containing residues R in the molecule is not less than 800, more preferably not less than 1000 and most preferably not less than 1200. It is desirable that at least two of these contain at least two isocyanate groups per residue with a preferred maximum of four isocyanate groups in any residue. The overall isocyanate equivalent weight of the polyisocyanate derivatives of Formula 1 is preferably not less than 500, more preferably not less than 750 and more preferably not less than 850. The isocyanate groups within an isocyanate group containing residue are suitably separated by a chain of not more than 25 atoms.

Polyisocyanate derivatives of Formula 1 may be obtained by reacting an isocyanate-reactive polymer having an average nominal functionality of 2 to 4 and an average equivalent weight in the range from 750 to 5000 with a stoichiometric excess of a diphenylmethane diisocyanate composition.

Diphenylmethane diisocyanate species may be used in the preparation of the polyisocyanate derivatives of Formula 1 include "pure" MDI preferably containing at least 60 % by weight of the 4,4'-isomer. Suitable isocyanates therefore include the substantially pure 4,4'-isomer and isomer mixtures containing not more than 40 %, preferably not more than 30 %, and more preferably not more than 20 %, by weight of the 2,4'-isomer and not more than 5 % by weight of the 2,2'-isomer. Other suitable diphenylmethane diisocyanate species include modified forms of these diphenylmethane diisocyanates including uretonimine-modified MDI having NCO contents of at least 25 % by weight.

Diphenylmethane diisocyanate species containing pure MDI and polymeric fillers may also be used in the preparation of the polyisocyanate derivatives of Formula 1. Such products have been described in the prior art and include polyurea dispersions in MDI. In these products, it is generally preferred that the dispersed polymer particles have an average particle size of less than 50 microns.

Further diphenylmethane diisocyanate species which may be used in the preparation of the polyisocyanate derivatives of Formula 1 include compositions containing polymethylene polyphenylene polyisocyanates. Thus, mixtures may be used containing at least 70 % by weight of pure MDI and up to 30 % by weight of the so-called crude MDI containing from 35 to 65 % by weight of diisocyanates, the remainder being largely polymethylene polyphenylene polyisocyanates having isocyanate functionalities greater than 2. Mixtures may also be used of pure MDI and polymeric MDI compositions containing higher proportions (up to 100 %) of the said higher functionality polyisocyanates.

Still further diphenylmethane diisocyanate species which may be used in preparing the polyisocyanate derivatives of Formula 1 include mixtures of the above described MDI types and up to 20 % by weight of another polyisocyanate or mixture of polyisocyanates. Other polyisocyanates which may be used in admixture with the MDI include aliphatic, cycloaliphatic and araliphatic polyisocyanates, especially diisocyanates, for example hexamethylene diisocyanate, isophorone diisocyanate, cyclohexane-1,4-diisocyanate, 4,4'-dicyclohexylmethane diisocyanate and m- and p-tetramethylxylene diisocyanates and, especially, aromatic polyisocyanates such as tolylene and phenylene diisocyanates.

The isocyanate-reactive polymer used in the preparation of the polyisocyanate derivatives of Formula 1 has an average nominal functionality of 2 to 4. The term "nominal functionality" refers to the functionality, with respect to isocyanates, that an isocyanate-reactive polymer would be expected to have having regard to its monomeric components. For example, a polyether prepared by the addition of propylene oxide to a glycol will have a nominal (hydroxyl) functionality of 2 although, in fact, its average functionality will be somewhat less than 2. Thus, for a polyether polyol, the average nominal functionality is the average functionality (number of active hudrogen atoms) of the initiator or initiators used in its preparation.

The average nominal functionality of the isocyanate-reactive polymer is preferably 2 to 3. Preferred average equivalent weights lie in the range from 1000 to 4000. Mixtures of two or more isocyanate-reactive polymers varying in functionality, equivalent weight and/or chemical constitution (end groups or backbone) may be used provided such mixtures conform to the average functionality and average equivalent weight criteria specified herein.

Isocyanate-reactive groups which may be present in the isocyante-reactive polymer include primary amino, secondary amino, thiol, carboxy, imino, enamino and, especially, hydroxyl groups.

Examples of polyisocyanate derivatives of Formula 1 include products obtained by reacting any of the above mentioned diphenylmethane diisocyanate compositions with polymeric polyols under conditions such that the initially formed urethane-modified polyisocyanates are converted to allophanate-modified polyisocyanates terminating in isocyanate group containing residues of the formula :

-O-CO-N-R'-NCO
          |
        CO-NH-R'-NCO

wherein R' comprises a methylene-bridged polyphenylene residue.

Polymeric polyols which may be used in the preparation of the allophanate-modified polyisocyanates preferably have been fully described in the prior art and, as examples of such polyols, there may be mentioned polyesters, polyesteramides, polythioethers, polycarbonates, polyacetals, polyolefins, polysiloxanes and, especially, polyethers.

Polyether polyols which may be used include the polyols disclosed above in connection with the preparation of the new polyisocyanate compositions according to the invention.

In preparing the allophanate-modified polyisocyanates, the diphenylmethane diisocyanate species and the polyol may be reacted together using conditions that have been fully described in the prior art for the production of urethane prepolymers. Thus, the polyisocyanate may be reacted with one or more polyols

under substantially anhydrous conditions at temperatures between about 40° and about 90° C, optionally in the presence of catalysts, until the formation of urethane groups by reaction between the isocyanate groups and the hydroxyl groups is substantially complete. Reaction between the urethane groups and the excess of polyisocyanate is then allowed to take place so that at least about 20 %, preferably at least 50 %, and optionally up to 100 % of the initially formed urethane groups are converted to allophanate groups. The conversion of urethane groups to allophanate groups may be assisted by catalysis and/or higher reaction temperatures.

Suitable catalysts are known in the polyurethane art and include tin compounds such as dibutyltin dilaurate.

In preparing the allophanate-modified polyisocyanates, the diphenylmethane diisocyanate and the polyol are suitably reacted in such proportions that the initial NCO/OH is at least about 2:1, preferably greater than about 5:1. One convenient method of preparing the compositions involves adding the polyol gradually to the total amount of polyisocyanate so as to minimise chain extension.

Examples of other polyisocyanate derivatives of Formula 1 include products obtained by reacting polymeric polyamines with the above mentioned diphenylmethane diisocyanate compositions under conditions such that the initially formed urea-modified polyisocyanates are converted to biuret-modified polyisocyanates terminating in isocyanate group containing residues of the formula :

$$\begin{array}{l} \quad CO-NH-R'-NCO \\ \quad | \\ -N \\ \quad | \\ \quad CO-NH-R'-NCO \end{array}$$

wherein R′ is as defined above.

Polymeric polyamines which may be used in the preparation of the biuret-modified polyisocyanates particularly include polyether triamines and, especially, polyether diamines. Suitable polyamines include products obtained by the reductive amination of polyether polyols as described, for example, in U.S. Patent 3,654,370 or by the cyanoethylation of polyols followed by hydrogenation. Polyoxypropylene diamines and triamines and mixtures thereof are preferred.

In preparing the biuret-modified polyisocyanates, the diphenylmethane diisocyanate species and the polyamine may be reacted together using conditions similar to those described above for the preparation of the allophanate-modified polyisocyanates.

Examples of further polyisocyanate derivatives of Formula 1 include products obtained by reacting the above mentioned diphenylmethane diisocyanate compositions with imino-functional polymers. Such polymers have been described in U.S. Patent No. 4,794,129 together with methods for their preparation and include polymers terminating in imine, oxazoline, imidazoline, N-alkyl imidazoline, oxazine, diazine, imino-ester, amidine, imidine, isourea and guanidine groups. The preferred imino-functional polymers are imine-terminated polyethers such as may be obtained, for example by reacting a polyether polyamine, especially a polyoxypropylene diamine or triamine, with an aldehyde or ketone.

Enamine functional polymers may be prepared either from secondary amine terminated resins (e.g. polyethers) by reaction with ketones/aldehydes having one or more alpha hydrogens, or by reacting ketone/aldehyde terminated resins (bearing alpha hydrogens) with secondary amines, providing for removal of the $H_2O$ formed in the reactions. Secondary amine terminated resins can be obtained, for example by catalytic hydrogenation of the imino-functional polymers described hereinabove.

Ketone/aldehyde terminated resins may be obtained, in general, by oxidation of the corresponding secondary or primary hydroxyl terminated resin. More highly reactive enamine functional polymers can be prepared by oxidizing a primary hydroxyl functional resin to the corresponding polycarboxylic acid, conversion of the said groups to orthoesters, end treatment of the latter, with an excess of a secondary amine. Each orthoester must contain at least one alpha hydrogen atom.

If desired, polyisocyanate derivatives of Formula 1 may be prepared by reacting diphenylmethane diisocyanate compositions with mixtures of any of the above mentioned polyols, polyamines, imino-functional compounds and/or enamine-containing compounds.

Further polyisocyanate derivatives of Formula 1 may be obtained by the reaction of a stoichiometric excess of any of the diphenylmethane diisocyanate species described above, with an isocyanate-reactive compound of the general formula :

$V_p(W)_q$ (2)

wherein V represents a chain of more than 70 atoms, P represents an integer of at least 1, W represents an isocyanate-reactive group containing residue and q is an integer of at least 2, at least one of the residues represented by W containing at least 2 isocyanate-reactive groups separated one from another by a chain from 2 to 10 atoms and the sum of the residues represented by W constituting less than 25 % of the total molecule on a weight basis.

As examples of the types of chain represented by V in the isocyanate-reactive compounds of Formula 2, there may be mentioned polyesters, polyesteramides, polycarbonates, polythioethers, polyacetals, polyolefins, polysiloxanes and, especially, polyethers.

The isocyanate-reactive compounds of Formula 2 preferably have molecular weights greater than 1800 with each V being a chain of more than 70, preferably more than 100, atoms in length. Especially preferred isocyanate-reactive compounds have molecular weights in the range 3,000 to 10,000. It is also preferred that the ratio of the molecular weight of the isocyanate-reactive compound of Formula 2 to the number of isocyanate-reactive group containing residues W in the molecule is not less than 800, more preferably not less than 1000 and most preferably not less than 1200. It is desirable that at least two of these contain at least two isocyanate-reactive groups per residue with a preferred maximum of four isocyanate-reactive groups in any residue. The overall equivalent weight, with respect to the total number of isocyanate-reactive groups, is preferably not less than 500, more preferably not less than 750 and most preferably not less than 850.

Isocyanate-reactive groups which may be present in the isocyanate-reactive compounds of Formula 2 include, for example, hydroxyl, thiol, primary and secondary amino groups and mixtures thereof. The isocyanate-reactive groups within an isocyanate-reactive group containing residue are preferably separated by a chain of not more than 5 atoms.

Examples of isocyanate-reactive compounds of Formula 2 include polyols obtained by the oxyalkylation of polyether diamines, for example polyols of the formula :

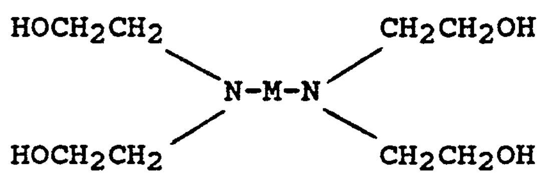

wherein M represents a polyoxyalkylene chain, especially a polyoxypropylene chain.

Particularly interesting polyisocyanate components according to the invention comprising a polyisocyanate of Formula 1, are the products of reacting, under allophanate forming conditions,

(i) a polyol component comprising at least one polyoxyalkylene polyol containing oxyethylene residues, said polyol component having an average nominal hydroxyl functionality of from 2 to 6, an average hydroxyl equivalent weight of from about 500 to 5000 and an average oxyethylene content of from 10 to 25 % on a weight basis of total oxyalkylene residues, and

(ii) a stoichiometric excess, relative to the polyol, of an organic polyisocyanate.

According to this embodiment of the invention the average nominal hydroxyl functionality of the polyol component is preferably 2 to 4. Preferred average equivalent weights lie in the range from 750 to 4000, for example from 1000 to 3000. In addition to the aforementioned functionality and equivalent weight criteria, the polyol component has preferably an oxyethylene content of from 10 to 25 % by weight of total oxyalkylene residues due to the presence therein of at least one polyoxyalkylene polyol containing oxyethylene (ethylene oxide) residues. Preferred polyol components comprises at least one poly-(oxyethylene-oxypropylene) polyol each having an oxyethylene content in the range from 10 to 25 % on a weight basis of total oxyalkylene residues. The oxyethylene and oxypropylene units in these poly-(oxyethylene-oxypropylene) polyols may be arranged randomly and/or in blocks.

Other useful polyol components contain a mixture of polyols including polyols, for example poly-(oxyethylene-oxypropylene) polyols, polyoxypropylene polyols and/or polyoxyethylene polyols, having oxyethylene contents outside the 10 to 25 % range provided the overall oxyethylene content of the component is within the specified range. Such mixtures may optionally contain one or more poly-(oxyethylene-oxypropylene) polyol having an oxyethylene content in the 10 to 25 % range. In addition to the possibility of using mixtures of polyols varying in oxyethylene content, mixtures of two or more polyols varying in functionality, equivalent weight and/or polymer backbone may be used provided such mixtures conform to the average functionality and average equivalent weight criteria specified herein.

Further particularly interesting polyisocyanate components according to the invention comprising polyisocyanates of Formula 1 may be obtained by the reaction of a stoichiometric excess of an organic polyisocyanate, for example any of the diphenylmethane diisocyanate species described above, with a polyol of the general Formula 2 wherein V represents a polyoxyalkylene chain of more than 70 atoms having an average oxyethylene content of from 10 to 25 % on a weight basis of total oxyalkylene residues, p represents an integer of at least 1, w represents a hydroxyl group containing residue and q is an integer of at least 2, at least one of the residues represented by W containing at least 2 hydroxyl groups separated one from another by a chain of from 2 to 10 atoms and the sum of the residues represented by W constituting less than 25 % of the total molecule on a weight basis. As examples of the types of polyoxyalkylene chain represented by V there may be mentioned random and block poly(oxyethylene-oxypropylene) chains.

The new polyisocyanate compositions of the invention, either alone or in conjunction with other organic polyisocyanates, and more generally polyisocyanate components comprising MDI derivatives of Formula 1, may be reacted with isocyanate-reactive materials, using known techniques, to form polyurethane, polyurea and other useful polymeric materials. The compositions are of particular value in the production of flexible foams.

For the preparation of flexible foams by moulding or slabstock techniques, the polyisocyanate compositions of the invention may be interacted with conventional materials including polyether triols, corresponding polyester polyols, water, volatile blowing agents, catalysts, surfactants and the like.

The polyisocyanate component is reacted with the isocyanate-reactive component in the presence as necessary of conventional additives which may for convenience be included in the isocyanate-reactive component or, if inert towards isocyanates, in the polyisocyanate component or as an additional stream. Such additives include catalysts, for example tertiary amines and tin compounds, surface-active agents and from stabilisers, for example siloxane-oxyalkylene copolymers, chain extenders, for example low molecular weight diols, diamines and di-imines, crosslinking agents, for example triethanolamine, flame retardants, organic and inorganic fillers, pigments and internal mould release agents. The method of the invention is preferably performed in the substantial absence of halocarbon blowing agent. The foam formulation contains less than 1 %, preferably less than 0.5 %, of halocarbon blowing agents, for example trichlorfluoromethane, so that less than 10 % of the blowing is due to the halocarbon.

The present invention is illustrated but not limited by the following examples.

Example 1

a) An allophanate prepolymer was prepared by reacting 33.9 parts of an 80/20 mixture of 4,4′- and 2,4′-diphenylmethane diisocyanates with 33.3 parts of a polypropylene-oxyethylene block copolymer triol of OH value 32 (commercialised by ICI under the name Daltocel T32-75) in the presence of 0.002 parts of dibutyltindilaurate at 115 °C. After 3 hours the theoretical NCO content (14.6 %) was reached and the reaction was stopped by addition of 1 part of salicylic acid and cooling down to 80 °C. The final NCO content was 14.4 % and the formation of allophanate functions was evidenced in the IR-spectrum by the absence of urethane absorption at 1220 $cm^{-1}$ and a sharpening of the peak at 1730 cm-1.

b) To the allophanate prepolymer was added another 32.8 parts of the polyol of OH value 32 as described previously. The reaction was continued at 83 °C-85 °C fpr 1,5 hours. The final NCO content was 8.6 % ($NCO_{Th}$=9.0 %). The IR-spectrum showed the re-appearance of a peak at 1220 $cm^{-1}$ and a broadening of the peak at 1730 $cm_{-1}$ due to urethane functions.

Example 2

A flexible foam was prepared by mixing 100 parts of the prepolymer of Example 1 with 3.2 parts of water and 0.16 parts of a tertiary amine catalyst (commercialised by Union Carbide as Niax A1). The flexible foam had a density of 43 $kg/m^3$ and following properties.

| Comp. set (% loss) | |
|---|---|
| [ISO 1856] | |
| dry 75 %<br>humid 75 % | 7<br>3.5 |
| Tear strength (N/m) | |
| [ISO 80672] | 280 |
| CV 40 % (kPa) | |
| [ISO 3386] | 3.4 |

Example 3

a) A prepolymer was prepared by reacting 30.4 parts of an 80/20 mixture of 4,4′- and 2,4′-diphenylmethane diisocyanates with 30.0 parts of a polyoxypropylene-oxyethylene block copolymer triol of OH value 32 (commercialised by ICI under the name Daltocel T32-75) in the presence of 0.002 parts of dibutyltindilaurate at 115° C. After 2 3/4 hours the theoretical NCO content (14.4 %) was reached and the reaction was stopped by crash-cooling to 80° C and by addition of 0.8 parts of salicyclic acid. The product had a final NCO content of 14.3 % and allophanate functions were evidenced by the systematic disappearance of the absorption at 1220 $cm^{-1}$, assigned to urethane functions and the sharpening of the peak at 1730 $cm^{-1}$ with shoulder at 1690 $cm^{-1}$.

b) To the allophanate prepolymer was added 39.6 parts of the same polyether triol of OH value 32. Reaction was continued for 2 hours at 80° C, and a further 5.25 parts of an 80/20 mixture of 4,4′- and 2,4′-diphenylmethane diisocyanates was added to the mixture to provide a polyisocyanate composition suitable for making flexible foam.

Example 4

A flexible foam was prepared by mixing 105.25 parts of the composition of Example 3, 3.25 parts of water and 0.25 parts of a tertiary amine catalyst (commercialised by Union Carbide as Niax A1). The resilient foam thus obtained had a density of 42 $kg/m^3$ and had extremely good humid ageing properties.

| Comp. set (% loss) | |
|---|---|
| [ISO 1856] | |
| dry 75 %<br>humid 75 % | 6<br>2.9 |
| Density ($kg/m^3$) | |
| [ISO 1855] | 42 |

Example 5

An allophanate prepolymer was prepared by reacting 40 parts of a 80/20 mixture of 4,4′- and 2,4′-diphenylmethane diisocyanates with 60 parts of a polyoxypropylene-oxyethylene block copolymer triol (PO/EO weight ratio 86/14) having a OH value 32, in the presence of 0.003 parts of dibutyltindilaurate at 115° C. When the theoretical NCO content of 10.6 % was reached, the reaction was stopped by addition of salicylic acid and cooled down to 80° C. The final NCO content was 10.7 % and the viscosity 83 Ps at

25°C. The formation of allophanate functions was detected by IR-spectroscopy (absence of urethane absorption at 1220 $cm^{-1}$ and a sharpening of the peak at 1730 $cm^{-1}$).

Example 6

A flexible foam was prepared by mixing 100 parts of the prepolymer from example 5 with 3.83 parts of water and 0.19 parts of Niax A1 (a tertiary amine catalyst commercialised by Union Carbide). The resulting flexible foam had a density of 31 $kg/m^3$ and good mechanical properties, with a low "compression set" value.

Example 7

A prepolymer was prepared by reacting 200 pbw of a MDI composition which contained 30 % diisocyanate isomers, the rest being higher oligomer polyisocyanates (so called polymeric MDI), with a polyoxypropylene-oxyethylene block copolymer triol (PO/EO weight ratio 86/14) having an OH-value 36, at 80-85°C for 2 hours. A product was obtained with an NCO content of 14.0 % by weight and a viscosity at 25°C of 16.3 Pa.s To this product was added an amount of 600 pbw of methylene diphenyldiisocyanate containing 20 % by weight of the 2,4′-isomer, to obtain a polyisocyanate composition with a final NCO content of 25.6 % by weight and a viscosity at 25°C of 260 m Pa.s

Example 8

A flexible foam was prepared by reacting 120 pbw of the polyisocyanate composition of Example 6 with 245 pbw of an isocyanate reactive composition of the following composition :

| | |
|---|---|
| - Polyoxypropylene oxyethylene block copolymer triol (PO/EO = 83/17) and $OH_V$ = 36 | 100 |
| - water | 2.8 |
| - Niax A1 | 0.1 |
| - Dabco 33LV | 0.2 |
| - Tegostab B4113 | 1.0 |
| - Dabco X8154 | 0.8 |
| - CFC 11 | 8.0 |

A good flexible foam is obtained with a density of 55 $kg/m^3$ and a hardness CLD 40 (ISO 3386) of 5.0 kPa.

**Claims**

1. A polyisocyanate composition having an NCO content of from 5 to 30 % by weight obtained by reacting a polyol having an average nominal hydroxyl functionality of from 2 to 3 and an average hydroxyl equivalent weight of from about 750 to about 5000 with a stoichiometric excess of an organic polyisocyanate comprising more than 65 % by weight of polyisocyanate having an isocyanate functionality of 3 or more.

2. A composition according to claim 1 wherein the polyol comprises a polyether polyol having an average hydroxyl equivalent weight in the range from 1000 to 3000.

3. A composition according to claim 1 wherein the organic polyisocyanate comprises a polymethylene polyphenylene polyisocyanate composition which contains :
0 - 20 % of diphenylmethane diisocyanates,
40 - 80 % of dimethylene triphenylene triisocyanates,
5 - 25 % of polymethylene polyphenylene tetra- and pentaisocyanates, and
0 - 20 % of higher polymethylene polyphenylene polyisocyanates on a weight basis.

4. A polyisocyanate composition comprising a polyisocyanate derivative having the general formula :

$T_m(R)_n$ (1)

wherein T represents a polyoxyalkylene chain of more than 70 atoms, m represents an integer of at least 1, R represents an isocyanate group containing residue and n is an integer of at least 2, at least one of the residues represented by R containing at least two isocyanate groups separated one from another by a chain of from 20 to 30 atoms and the sum of the residues represented by R constituting less than 50 % of the total molecule on a weight basis, said polyisocyanate composition being the reaction product of :

(i) a polyol component comprising at least one polyoxyalkylene polyol containing oxyethylene residues, said polyol component having an average nominal hydroxyl functionality of from 2 to 6, an average hydroxyl equivalent weight of from about 500 to about 5000 and an average oxyethylene content of from 10 to 25 % on a weight basis of total oxyalkylene residues, and

(ii) a stoichiometric excess, relative to the polyol, of an organic polyisocyanate.

5. A polyisocyanate composition according to claim 4 wherein the polyol component has an hydroxyl functionality of from 2 to 4 and an average hydroxyl equivalent weight in the range from 1000 to 3000 and comprises at least one poly(oxyethylene-oxypropylene) polyol having an oxyethylene content in the range from 10 to 25 % on a weight basis of total oxyalkylene residues.

6. A polyisocyanate composition according to claim 4 having isocyanate group containing residues of the formula :

```
-O-CO-N-R'-NCO
      |
      CO-NH-R'-NCO
```

wherein R′ comprises a hydrocarbon residue.

7. A polyisocyanate composition according to claim 4 wherein the organic polyisocyanate comprises a diphenylmethane diisocyanate composition.

8. A reaction system for use in making a polymeric foam or a reaction injection moulded elastomer, said system comprising the following components :

(A) a polyisocyanate composition as defined in claim 1 or 4, and

(B) an isocyanate-reactive component.

9. A method for the preparation of a flexible polymeric foam which comprises reacting a polyisocyanate component with an isocyanate-reactive component comprising water, the polyisocyanate component comprising diphenylmethane diisocyanate derivatives of the general formula :

$T_m(R)_n$ (1)

wherein T represents a chain of more than 70 atoms, m represents an integer of at least 1, R represents an isocyanate group containing residue and n is an integer of at least 2, at least one of the residues represented by R containing at least two isocyanate groups separated one from another by a chain of from 5 to 30 atoms and the sum of the residues represented by R constituting less than 50 % of the total molecule on a weight basis.

10. A method according to claim 9 wherein the polyisocyanate of Formula 1 is a product obtained by reacting an isocyanate-reactive polymer having an average nominal functionality of 2 to 4 and an average equivalent weight in the range from 750 to 5000 with a stoichiometric excess of a diphenylmethane diisocyanate composition.

11. A method according to claim 9 wherein the polyisocyanate of Formula 1 is an allophanate-modified polyisocyanate terminating in isocyanate group containing residues of the formula :

```
-O-CO-N-R'-NCO
      |
      CO-NH-R'-NCO
```

wherein R′ comprises a methylene-bridged polyphenylene residue.

12. A method according to claim 9 wherein the polyisocyanate of Formula 1 is a biuret-modified polyisocyanate terminating in isocyanate group containing residues of the formula :

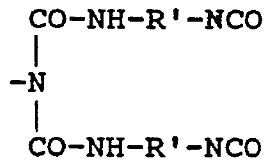

wherein R′ comprises a methylene-bridged polyphenylene residue.